(19) **Europäisches Patentamt**

**European Patent Office**

**Office européen des brevets**

(11) **EP 0 984 478 A1**

(12) **EUROPÄISCHE PATENTANMELDUNG**

(43) Veröffentlichungstag:
08.03.2000 Patentblatt 2000/10

(51) Int. Cl.⁷: $H01H\ 83/14$, $H02H\ 3/33$, $H01F\ 1/147$

(21) Anmeldenummer: 98116430.4

(22) Anmeldetag: 31.08.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder:
**SIEMENS AKTIENGESELLSCHAFT**
**80333 München (DE)**

(72) Erfinder:
• **Bauer, Bernhard Dipl.-Ing.**
**93053 Regensburg (DE)**
• **Kleemeier, Manfred Dipl.-Ing.**
**93073 Neutraubling (DE)**
• **Lehner, Gerald Dipl.-Ing.**
**93083 Obertraubling (DE)**
• **Schmid, Reinhard Dipl.-Ing**
**93051 Regensburg (DE)**

(54) **Wandlermaterial für Fehlerstromschutzeinrichtungen und seine Verwendung**

(57)    Wandlermaterial für Fehlerstromschutzeinrichtungen, darauf eingestellt, daß es bei Aussteuerung mit einer maximalen Feldstärke, Hmax,
von

$$Hmax = 10\frac{mA}{cm}$$

bei 50 Hz Wechselspannung Bedingung genügt

$$Bmax \geq 0,2\ T,$$

$$Hc \leq 5,0\frac{mA}{cm}$$

und bei einer Feldstärke

$$Hmax = 50\frac{mA}{cm}$$

der Bedingung genügt

$$Br\ x\ Hc > 150\frac{mVAs}{m^3},$$

wobei Bmax die maximale magnetische Induktion bei einer bestimmten Wechselerregung und Hc die Koerzitivfeldstärke, hier bei 50 Hz, ist.

FIG 1

Printed by Xerox (UK) Business Services
2.16.7/3.6

**Beschreibung**

Die Erfindung bezieht sich auf ein Wandlermaterial für Fehlerstromschutzeinrichtungen. Unter Fehlerstromschutzeinrichtungen sollen hier sowohl netzspannungsunabhängige Einrichtungen verstanden werden als auch netzspannungsabhängige, die zur Gewinnung des Auslösesignals Netzspannung zur Versorgung elektronischer Schaltungen benötigen. Netzspannungsunabhängige Fehlerstromschutzeinrichtungen werden auch als FI-Schutzeinrichtungen und netzspannungsabhängige Schutzeinrichtungen auch als DI-Schutzeinrichtungen bezeichnet.

Bei Fehlerstromschutzeinrichtungen werden aus wirtschaftlichen Erwägungen gerne Wandler aus kristallinem NiFe-Material mit weichmagnetischen Eigenschaften eingesetzt. Dabei werden für auf Wechselfehlerstrom sensitive Schutzeinrichtungen Materialien eingesetzt, die auf hohe Permeabilitäten bei kleinen Feldstärken gezüchtet sind. Charakteristisch für derartige Materialien ist eine sogenannte runde Hysterese-Schleife, weshalb sie auch als R-Material gattungsmäßig bezeichnet werden. Erfassungssysteme von FI-Schutzeinrichtungen mit Nennfehlerstrom 30 mA weisen im Arbeitspunkt bei beispielsweise einer maximalen Feldstärke, Hmax, von 10 $\frac{mA}{cm}$ in der Regel folgende typische Werte auf:

$$Hc > 5,0 \frac{mA}{cm} \text{ bei 50 Hz,}$$

magnetische Induktion Bmax ≥ 0,3 T.
Die magnetischen Verluste dieser Materialien sind entsprechend ihrer breiten Hystereseschleife verhältnismäßig hoch. Als Maß für die Verluste kann das Produkt Br x Hc dienen.

Hierbei ist:

Br: die Remanenzinduktion
Bmax: die maximale Induktion bei einer bestimmten Aussteuerung mit Wechselerregung
Hc: die Koerzitivfeldstärke, hier bei 50 Hz.

Bei einer Aussteuerung mit

$$Hmax = 50 \frac{mA}{cm}$$

liegt dieses Produkt bei größer oder gleich 500 mVAs/m³.

Für die Erfassung von Wechselfehlerströmen und von pulsierenden Fehlerströmen mit einem Gleichstromanteil sind Materialien mit einer sogenannten flachen Hystereseschleife, F-Materialien, entwickelt worden. Derartige Materialien haben wegen der schmalen Hystereseschleife geringe Verluste. Bei einem Arbeitspunkt von Hmax = 10 A/cm weist ein F-Material für Fehlerstromschutzeinrichtungen mit einem Nennfehlerstrom von 30 mA in der Regel folgende typische Werte auf:

$$Hc \leq 5,0 \frac{mA}{cm} \text{ bei 50 Hz,}$$

Induktion Bmax ≤ 0,18 T. Das Produkt Br x Hc ergibt hierbei für Hmax = 50 mA/cm üblicherweise einen Wert, der kleiner oder gleich 800 mVAs/m³ beträgt.

Seit einiger Zeit sind auch nanokristalline Materialien auf dem Markt, die sich insbesondere durch ihre Verlustarmut auszeichnen und somit ein besonders niedriges Produkt Br x Hc aufweisen. Bei derartigen Materialien mit extrem schmaler Hystereschleife und entsprechend geringen Verlusten liegen in der Regel folgende Werte vor:

Bei einem Arbeitspunkt, beispielsweise

$$Hmax = 10 \frac{mA}{cm},$$

und bei einem Nennfehlerstrom von 30 mA für eine Schutzeinrichtung lassen sich die Werte feststellen:

$$Hc \leq 5,0 \frac{mA}{cm} \text{ bei 50 Hz,}$$

magnetische Induktion Bmax ≤ 0,3 T;
bei Hmax = 50 mA/cm beträgt das Produkt

$$Br \times Hc \leq 150 \frac{mVAs}{m^3}.$$

Die extreme Verlustarmut von nanokristallinem Wandlermaterial führt zu Auslösekreisen mit hoher Güte und schmalbandigen Resonanzüberhöhungen, wenn sie in Resonanzkreisen eingesetzt werden, um auch eine Fehlerstromempfindlichkeit für pulsierende Fehlerströme zu erreichen. Bei der Fertigung mit hohen Stückzahlen kann die jeweilige Justierung von Fehlerstromschutzeinrichtungen mit derartigen Materialien aufwendig und störend sein. Außerdem sind sie für primärseitige Stoßströme sekundärseitig empfindlich, also für transiente Störbeeinflussung.

Der Erfindung liegt die Aufgabe zugrunde, ein Wandlermaterial für Fehlerstromschutzeinrichtungen zu entwickeln, das die geschilderten Vorteile bekannter Materialien nutzt und deren geschilderte Nachteile vermeidet.

Die Lösung der geschilderten Aufgabe erfolgt durch ein Wandlermaterial nach Anspruch 1. Es ist darauf eingestellt, daß es bei einer Aussteuerung mit einer maximalen Feldstärke, Hmax, von Hmax = 10 mA/cm bei 50 Hz Wechselspannung der Bedingung genügt

$$Bmax \geq 0,2 \text{ T},$$

$$Hc \leq 5,0\frac{mA}{cm}$$

und bei einer Feldstärke Hmax = 50 mA/cm der Bedingung genügt Br x Hc > 150 mVAs/m$^3$,
wobei Bmax die maximale magnetische Induktion bei einer bestimmten Wechselerregung und Hc die Koerzitivfeldstärke, hier bei 50 Hz, ist. Ein derartiges Wandlermaterial weist eine schmalere Kurve hinsichtlich der Abszisse als R-Material auf. Andererseits hat es eine höhere Hysteresekurve hinsichtlich der Ordinate. Das Material hat den Vorteil, daß es verhältnismäßig verlustarm ist, wirtschaftlich günstiger als nanokristallines Material ist und im Vergleich hinsichtlich der Verluste eine hohe magnetische Induktion und somit eine hohe Signalübermittlung bei kleinen Fehlerströmen aufweist.

Die geschilderten Werte lassen sich besonders wirtschaftlich mit einem Kernmaterial für den Summenstromwandler der Fehlerstromschutzeinrichtung auf der Basis von Nickel Eisen, NiFe, erzielen. Die Verwendung eines Wandlermaterials nach Anspruch 1 oder nach Anspruch 2 ist besonders für eine Fehlerstromschutzeinrichtung empfehlenswert.

Die Erfindung soll nun anhand von in der Zeichnung wiedergegebenen Diagrammen für ein Wandlermaterial nach Ausführungsbeispiel näher erläutert werden:

In FIG 1 ist ein Diagramm für die Hysteresekurve bei Hmax = 10 mA/cm und bei 50 Hz Wechselspannung wiedergegeben.

In FIG 2 ist ein Diagramm für die Hysteresekurve des Wandlermaterials für Hmax = 50 mA/cm bei 50 Hz Wechselspannung dargestellt.

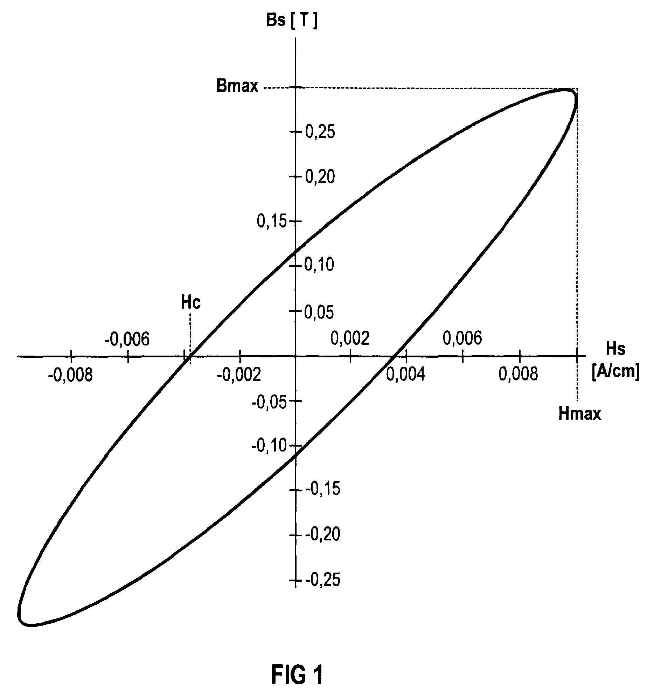

Für ein Wandlermaterial auf der Basis von NiFe ist bei einer Aussteuerung mit einer maximalen Feldstärke, Hmax, von 10 mA/cm bei 50 Hz Wechselspannung die Hysteresekurve in FIG 1 dargestellt. Auf der Abszisse ist jeweils die Scheitelfeldstärke Hs in A/cm aufgetragen und auf der Ordinate die magnetische Scheitelinduktion Bs in Tesla, T, aufgetragen. Dem Ausführungsbeispiel entnimmt man folgende Werte:

$$Bmax = 0,3 \text{ T}$$

$$Hc = 0,0038 \text{ A/cm} = 3,8 \text{ mA/cm}$$

bei einer Aussteuerung mit Hmax = 10 mA/cm bei 50 Hz Wechselspannung. Es ergibt sich also, daß

$$Bmax \geq 0,2 \text{ T und}$$

Hc ≤ 5 mA/cm gemäß der Auswahlforderung ist.

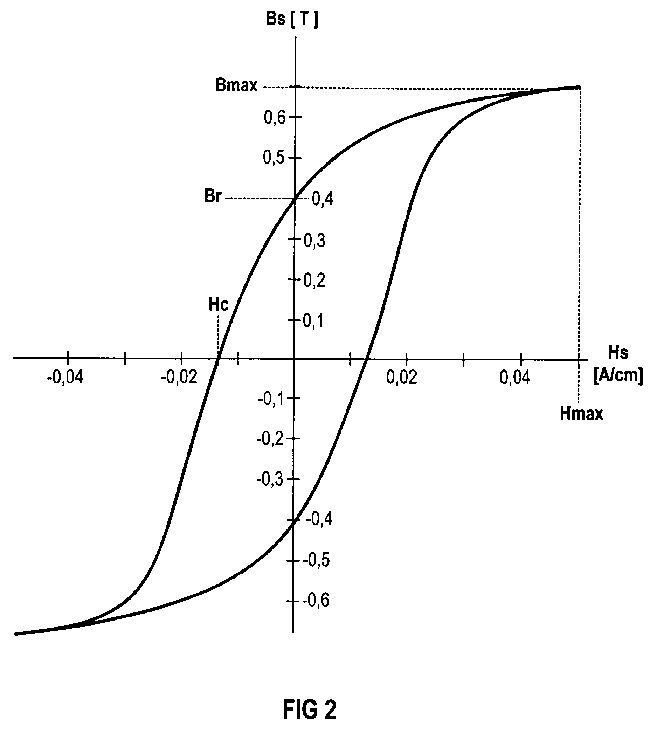

In FIG 2 ist auf der Ordinate wieder die Scheitelfeldstärke H in A/cm und auf der Ordinate die Scheitelinduktion Es in Tesla, T, aufgetragen. Es sind weiter die Werte für Hmax, Bmax, Br und Hc wieder herausgehoben. Bei einer Aussteuerung mit Hmax = 50 mA/cm und 50 Hz Wechselspannung nach FIG 2 entnimmt man für das Wandlermaterial nach Ausführungsbeispiel, das auch FIG 1 zugrunde gelegt hat, die Werte:

$$Br = 0,4 \text{ T}$$

$$Hc = 0,014 \text{ A/cm, und somit}$$

$$Br \text{ x } Hc = 560\frac{mVAs}{m^3},$$

was die Auswahlforderung Br x Hc > 150 mVAs/m$^3$ erfüllt.

Bei einem derartigen Wandlermaterial ist vorteilhaft: eine geringe Koerzitivfeldstärke und geringe Verluste und eine vergleichsweise hohe magnetische Induktion bei kleinen Feldstärken. Man erhält somit ein hohes Nutzsignal sekundärseitig des Summenstromwandlers einer Fehlerstromschutzeinrichtung bei kleinen primärseitigen Fehlerströmen. Diese Eigenschaften kommen besonders bei wechselstromsensitiven Fehlerstromschutzeinrichtungen mit einem Nennfehlerstrom bis 30 mA zum Tragen.

**Patentansprüche**

1. Wandlermaterial für Fehlerstromschutzeinrichtungen, darauf eingestellt, daß es bei Aussteuerung mit einer maximalen Feldstärke, Hmax, von

$$Hmax = 10\frac{mA}{cm}$$

bei 50 Hz Wechelspannung der Bedingung genügt

$$Bmax \geq 0,2 \text{ T},$$

$$Hc \leq 5,0\frac{mA}{cm}$$

und bei einer Feldstärke

$$Hmax = 50\frac{mA}{cm}$$

der Bedingung genügt

$$Br \times Hc > 150\frac{mVAs}{m^3},$$

wobei Bmax die maximale magnetische Induktion bei einer bestimmten Wechselerregung und Hc die Koerzitivfeldstärke, hier bei 50 Hz, ist.

2. Wandlermaterial nach Anspruch 1,
**dadurch gekennzeichnet,**
daß das Material auf der Basis von NiFe hergestellt ist.

3. Verwendung eines Wandlermaterials nach Anspruch 1 oder 2 für eine Fehlerstromschutzeinrichtung.

4. Verwendung eines Wandlermaterials nach Anspruch 1 oder 2 für eine Fehlerstromschutzeinrichtung mit einem Nennfehlerstrom bis 30 mA.

5. Verwendung eines Wandlermaterials nach Anspruch 1 oder 2 für eine Fehlerstromschutzeinrichtung für Wechselfehlerströme und für Nennfehlerströme bis in der Größenordnung von 30 mA.

FIG 1

FIG 2

Europäisches
Patentamt

**EUROPÄISCHER RECHERCHENBERICHT**

Nummer der Anmeldung

EP 98 11 6430

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 046 279 A (VACUUMSCHMELZE GMBH) 24. Februar 1982 * Seite 7, Absatz 4 - Seite 8, Absatz 1; Ansprüche 1,6 * --- | 1-4 | H01H83/14 H02H3/33 H01F1/147 |
| A | F.PFEIFER ET AL: "New soft magnetic alloys for applications in modern electrotechnics and electronics" IEEE TRANSACTIONS ON MAGNETICS., Bd. 5, Nr. 3, September 1969, Seiten 365-370, XP002089703 NEW YORK US * Seite 365 - Seite 367, Spalte 1, Absatz 6; Abbildung 1 * --- | 1-3 | |
| A | EP 0 635 922 A (SIEMENS AG) 25. Januar 1995 * Ansprüche 1,3,4 * ----- | 1,2 | |

**RECHERCHIERTE SACHGEBIETE (Int.Cl.6)**

H01H
H02H
H01F

Der vorliegende Recherchenbericht wurde für alle Patentansprüche erstellt

| Recherchenort | Abschlußdatum der Recherche | Prüfer |
|---|---|---|
| DEN HAAG | 12. Januar 1999 | Decanniere, L |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 98 11 6430

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-01-1999

| Im Recherchenbericht angeführtes Patentdokument | Datum der Veröffentlichung | Mitglied(er) der Patentfamilie | | Datum der Veröffentlichung |
|---|---|---|---|---|
| EP 0046279 A | 24-02-1982 | DE | 3031257 A | 18-03-1982 |
| | | AT | 14167 T | 15-07-1985 |
| | | US | 4441940 A | 10-04-1984 |
| EP 0635922 A | 25-01-1995 | AT | 149755 T | 15-03-1997 |
| | | DE | 59401885 D | 10-04-1997 |
| | | DK | 635922 T | 15-09-1997 |
| | | ES | 2098821 T | 01-05-1997 |

Für nähere Einzelheiten zu diesem Anhang : siehe Amtsblatt des Europäischen Patentamts.Nr.12/82